Europäisches Patentamt

(19) **European Patent Office**

**Office européen des brevets**

(11) Publication number: **0 114 710**

**A2**

(12) # EUROPEAN PATENT APPLICATION

(21) Application number: **84200055.6**

(22) Date of filing: **18.01.84**

(51) Int. Cl.³: **C 04 B 25/02**
**C 04 B 41/20, B 44 C 3/04**

(30) Priority: **21.01.83 NL 8300219**

(43) Date of publication of application:
**01.08.84 Bulletin 84/31**

(84) Designated Contracting States:
**AT BE CH DE FR GB IT LI LU NL SE**

(71) Applicant: **N.V. Stone Art S.A.**
**Stuifzandstraat 38**
**B-3583 Overpelt(BE)**

(72) Inventor: **Wittenberg, Henricus Antonius**
**Hoek 3**
**NL-5571 GJ Bergeijk(NL)**

(74) Representative: **Noz, Franciscus Xaverius, Ir. et al,**
**Algemeen Octrooibureau P.O. Box 645**
**NL-5600 AP Eindhoven(NL)**

(54) **Method of manufacturing figurines with the aid of a mould.**

(57) A method of manufacturing figurines with the aid of a mould by filling the mould with a curable mixture of more than 90% by weight of fine-granular, inorganic material and less than 10% by weight of an organic material, which is at least partly hardened in the mould, the object being finally released, whereby the mixture is made of 92 to 98% by weight of broken marble grains having a particle size of 0.02 to 0.8 mm and 8 to 2% by weight of organic binder.

EP 0 114 710 A2

-1-

Method of manufacturing figurines with
the aid of a mould.

The invention relates to a method of manufacturing figurines with the aid of a mould by filling a mould with a curable mixture comprising more than 90% by weight of fine-granular inorganic material and less than 10% by weight of organic material, said mixture being at least partly hardened in the mould and the object being finally released.

Such a method is known from French Patent Application 2,242,344 in which a mixture is prepared of more than 90% by weight of mineral grains, for example, granite, marble, sand, quartz and the like having a grain size of a few µms to 2.5 mm, the binder being a ureum resin. This mixture can be used for manufacturing figurines. Attempts have been made to find a method of improving the quality of such figurines and of minimizing the costs of manufacture for these figurines. It has been found that this is possible inter alia by a specific choice of the parameters with respect to the amounts to be used and to the grain size, whilst the finish of the figurines has been improved by using specific inorganic material.

European Patent Application 0051821 discloses a method of manufacturing articles, especially plates, from the combination of inorganic material and organic binder in a mould, in which the inorganic material is sand, chalk, barium sulphate, corundum, slacks and the like and the mixture is compressed in the mould at a pressure of 100 to 500 $kp/cm^2$. In order to accelerate curing the mixture in the mould is heated to a temperature of 150 $^{o}C$ at the most. With respect to this method the present method is improved in that high pressures are not required and the finish of the figurines can be simplified by a specific choice of the inorganic material. Belgian Patent Specification 855,060 describes a process of manufacturing articles from a curable mixture of binder and sand in which a specific curing agent is used being a polyol and a polyisocyanate. This Belgian Patent does not provide specific information about the curing conditions other than that river sand is used having a particle size of 0.5 to 2 mm (see Example II of the Belgian Patent).

The method according to the invention as mentioned in the preamble is characterized in that the mixture is made from 92 to 98% by weight of broken marble grains having a particle size of 0.02 to 0.8 mm and 8 to 2% by weight of organic binder. The organic binder is preferably a polyester, metacrylate, epoxy resin and polyurethane, whilst in a further, preferred embodiment the organic binder may be composed of a) a polyol with an accelerator and b) an isocyanide an example of which is mentioned in said Belgian Patent 855,060.

After curing in the mould, which can take place at the ambient temperature without an increase in pressure over the pressure occurring when the contents of the mould are vibrated, the figurines are released from the mould, after which it may be necessary to trim the figurines in order to remove unevennesses, if any. When the figurines are made from inorganic materials such as sand or ground stone, such trimming is labour-intensive and comparatively much grinding material (diamond) is required. This has now been improved by using the method embodying the invention in which inter alia grinding is simplified and less grinding material (diamond) is required. In order to manufacture seamless figurines it is preferred to use a mould of the kind described in Dutch Patent Application 7301411, now the patent 166,206. Patent Application 7301411 describes that various kinds of curable materials may be used, there being especially mentioned plaster, cement, resins and paraffin, but not a composition embodying the invention mentioned above.

If the organic constituent, for which polyurethane, polyester, metacrylate, epoxy resin or polyol/isocyanide may be used, is chosen to be less than an amount of 2% the resultant binding between the marble grains is not sufficient. If the amount of organic binder is more than 8% by weight, the external appearance of the figurine resembles too much that of a figurine of synthetic material.

The marble grains have a particle size between 0.02 and 0.8 mm, which limits have found to be effective to obtain an optimum figurine because below 0.02 mm the dust-like material can be mixed only with difficulty, whereas at a particle size exceeding 0.8 mm the basic material is too coarse so that structural modifications become visible in the figurine formed.

The organic binder is chosen in dependence on the desired curing time and the desired colour of the object to be produced. Preferably the curing time will be chosen to be as short as possible, which may be 5 to 7 minutes when polyurethane is used, mixed as the case may be, with titanium dioxide to provide a white coloured figurine. For this purpose a mixture of 40 g of polyurethane, 30 g of titanium dioxide (titanium white) and about 930 g of marble may be used. When a polyester, metacrylate or epoxy resin is used, the curing time is longer being 30 to 120 minutes, which period of time can be reduced by raising the temperature.

The present method of manufacturing figurines can be carried out by preparing a mixture of marble grains and a first constituent of the organic binder such as polyol to which an accelerator is added to an amount of 3 to 5% calculated on polyol. A second mixture is prepared from marble grains and aromatic isocyanide. The two mixtures are separately fed to a screw mixer, the mixture reaching a final mixer in which the supplied constituents are mixed and the binder is formed. Then the moulds are filled and vibrated to obtain the desired consolidation. The moulds thus filled are kept for the required curing period, after which the moulds are removed. In practice the filled moulds will be transported to a place where the moulds are removed, the time of transport being chosen so, that at the place of removal of the moulds the composition in the mould has sufficiently hardened.

The resultant figurine may be painted. Because white is preferred it is common practice to add titanium dioxide (titanium white) to the basic material. In order to avoid any discoloration by ultraviolet light due to the synthetic material it is desirable to include, in dependence on the binder used, UV stabilizers and comparable additives in the mixture to be made. The use of such additives is known to an expert in this field. Curing in the mould may take place at the ambient temperature, though at higer temperatures the curing period may be shorter. After removal of the mould the resultant sculpture can be finished manually or by grinding, freed of dust, if any, and then dipped in a dispersion of a lacquer-containing product, for example, an acrylate or a transparent, invisible film on the object so that dirt is repelled and the figurine can be easily cleaned without excessive danger of damage or of loss of material.

By means of said method and by using the said compositions a figurine can be produced within a short time, whilst the article has a quite natural appearance and a high quality comparable to sculptures made by hand.

The figures used in the claims are only meant to explain more clearly the intention of the invention and are not supposed to be any restriction concerning the interpretation of the invention.

-1-

Claims.

1.      A method of manufacturing figurines with the aid of a mould by filling the mould with a curable mixture of more than 90% by weight of fine-granular, inorganic material and less than 10% by weight of an organic material, which is at least partly hardened in the mould, the object being finally released, characterized in that the mixture is made of 92 to 98% by weight of broken marble grains having a particle size of 0.02 to 0.8 mm and 8 to 2% by weight of organic binder.

2.      A method as claimed in claim 1, characterized in that the organic binder is chosen from a polyester, metacrylate, an epoxy resin and polyurethane.

3.      A method as claimed in claim 1, characterized in that the organic constituent is formed by a) a polyol with an accelerator and b) an isocyanide.

4.      A method as claimed in claim 3, characterized in that the basic mixture is obtained by feeding the basic substance to a two-constituent mixing machine to which on the one hand a portion of the marble grains mixed with polyol and accelerator and on the other hand the remaining portion of the marble grains mixed with an isocyanide are supplied, said two effluents being batch-wise mixed in a mixer, from which the mixture is poured into the mould, in which it is vibrated to obtain the desired consolidation, after which it is hardened and freed of the mould.

5. A method as claimed in claims 1 to 4, characterized in that to the curable basic mixture is added a colorant such as titanium dioxide, which is supplied together with the marble and the polyol with the accelerator.

6. A method as claimed in claims 1 to 5, characterized in that after a residence time of the material for a few minutes to one hour, in a mould as described in Dutch Patent Specification 166,206, the mould is removed and the mould-free object is finished and dipped in a dispersion of transparent lacquer.

7. A method as claimed in claim 6; characterized in that the transparent lacquer is an acrylate dispersion.